# EUROPEAN PATENT APPLICATION

(11) **EP 1 030 465 A1**
(43) Date of publication of application: **23.08.2000**
(21) Application number: 99301195.6
(22) Date of filing: 18.02.1999
(51) Int. Cl.: H04B 7/185, H04B 7/204

(54) **Communications apparatus and method**

(71) Applicant: ICO Services Ltd., London W6 9BN (GB)
(72) Inventor: Wyrwas, Richard, London N14 6NL (GB)
(74) Representative: Musker, David Charles

(57) **Abstract**

A method of mitigating interference in a satellite user uplink signal of a satellite mobile communications system which comprises a plurality of non-geostationary orbiting satellites (4) each radiating a beam pattern of multiple beams, comprising: providing overlapping coverage of a region of the Earth which is subject to interference at an interference frequency, by a first beam of a first satellite (4a) and at least a second beam of a second satellite (4b); determining which of said first or said second beam is more peripheral within their respective satellite beam patterns; and controlling communications (e.g. not using) on the more peripheral said beam to limit reception thereby at said interference frequency.

## Description

### FIELD OF THE INVENTION

This invention relates to communications with a user, and particularly to such communications in which the link to the user is via a satellite or satellites.

Terrestrial cellular communication systems are well known in the art and a number of standards, such as the GSM standard and the PCN standard exist which define different signalling protocols for them. Details of these standards are given for example in "Mobile Radio Technology" by Gordon White, Butterworth Heinemann, 1994. The GSM and PCN systems are digital communication systems and allow paging and data communications in addition to voice communications.

Mobile satellite communication systems have also been proposed in which radio frequency links are provided by a constellation of satellites. These satellite communication systems provide much greater coverage than terrestrial cellular systems. One example of such a system is the ICO™ system, aspects of which are described in patent publications WO 95/28747, WO 96/03814 and GB 2,295,296A. Other examples include the Iridium™ satellite cellular system, described for example in EP-A-0365885, and the Odyssey™ mobile communication system described for example in EP-A-0510789, EP-A-0575678 and EP-A-0648027.

An alternative proposed satellite cellular system is described in EP 0536921 and EP 0506255.

Because of the altitude of the satellites, the distance travelled by a signal from the user terminal to the satellite, and from the satellite to the Earth station, is much longer than the distance between a terrestrial user terminal and its local based station. According, the attenuation undergone by the signal is substantially higher.

In the user terminal uplink direction, the power available from some times of terminal (such as handsets) is very limited, and the gain of the antennas may be very low. As the satellite has somewhat higher power, the signal strength on the user downlink is somewhat larger. In the feeder link between the Earth station and the satellite, more power and higher gain antennas are available. Accordingly, the user terminal uplink is, in many cases, the link on which the signal is most susceptible to interference.

In addition to the thermal noise radiated by the planet on which the terminals are located, each user terminal may interfere with transmissions from others (despite nominally occupying a different time or frequency channel) due to errors or spreading in time and frequency.

Furthermore, although radio frequency usage is regulated, the fact that satellite systems cover the whole or a substantial part of the world makes it likely that in at least some areas, the frequencies used on the user link will also be used by terrestrial transmitters, which are therefore, from the point of view of the satellite system, interference generators.

Such interferers may be of several different types, and may be broad band or narrow band; random or repetitive; high power or low power and so on.

EP 0519021 discloses a method of reducing interference between terrestrial and satellite communications systems by controlling the power levels in the terrestrial system.

WO 96/031016 discloses a method of preventing interference between two satellite systems by predicting the zone where interference will occur and inhibiting transmission into that zone by one of the systems.

US 5227802 describes how, in the Iridium™ system, lateral edge beams of selected satellites are turned off as the satellites approach the pole and turned on again thereafter, to avoid interference between beams from two different satellites.

Satellite systems such as that to be operated by the present applicant provide for global visibility of at least two satellites at any point on the Earth at any time of the day.

The communications channels used by different satellites are arranged not to interfere, so that a user terminal can communicate through multiple different satellites simultaneously without interference between the satellites.

In many areas of the globe, and at many times of day, a given area of the Earth will be visible to a first satellite through a relatively high elevation beam (i.e. one which is close to the centre of the pattern of beams projected by the satellite) and to a second satellite through a relatively low elevation beam (i.e. one at or closer to the periphery of the beam pattern).

This in general increases the probability of reception. However, in certain areas of the earth, corresponding for example to particular jurisdictions or to the sites of particular transmitters, interfering signals may be radiated.

Many such signals are radiated azimuthally on the Earth, and hence are not received to any great extent in high elevation beams. However, we have realised that low elevation beams are more liable to interference from azimuthally radiating terrestrial interference sources.

Additionally, low elevation beams cover a wider area of the Earth due to the spherical geometry of the Earth, and will therefore encompass a larger number of such interference sources, leading to a potentially higher impact on the signals received through such beams.

Accordingly, the present invention determines whether an area which is potentially subject to interference is covered by a relatively low elevation beam and one or more relatively higher elevation beams, and if so, restricts the use of the lower elevation beam, at least at frequencies which would overlap those of the interference.

Where (as will often be the case) only some areas of the Earth are subject to such interference, the present invention accordingly permits the advantages of satellite diversity (discussed in GB 2293725, or EP 0837568) whilst reducing the susceptibility to interference. However, the invention is also applicable to cases of overlapping coverage where satellite diversity is not used.

Conveniently, the use of the beams may be limited, for example, by not using the beams for new calls; or by handing off existing calls.

When a given user terminal ceases to transmit using satellite diversity, it therefore saves battery power. Additionally, if an entire beam ceases to be used for diversity, the downlink carrier can be switched off (at least for much of the time), saving power and hence releasing capacity at the satellite.

Alternatively, the frequencies allocated by all satellites and beams may be altered to allow the peripheral beams to use any frequencies which are free from interference.

Other aspects and preferred embodiments of the invention are as described or claimed hereafter, with advantages which will be apparent from the following.

### BRIEF DESCRIPTION OF THE DRAWINGS

Embodiments of the invention will now be described, by way of example only, with reference to the accompanying drawings, in which:
Figure 1 is a block diagram showing schematically the elements of a first communications system embodying the present invention;
Figure 2a is an illustrative is a block diagram showing schematically the elements of mobile terminal equipment suitable for use with the present invention; and
Figure 2b is a corresponding block diagram;
Figure 3 is a block diagram showing schematically the elements of an Earth station node forming part of the embodiment of Figure 1;
Figure 4 illustrates schematically the beam footprints on Earth produced by a satellite in the embodiment of Figure 1;
Figure 5 illustrates schematically the rings of beams produced by the satellite in space;
Figure 6 illustrates the overlap on Earth of the footprints of adjacent satellites in a single orbital plane of satellites;
Figure 7 illustrates schematically the disposition of satellites forming part of Figure 1 in orbits around the Earth;
Figure 8 is a diagram illustrating schematically the geometry of an interference source;
Figure 9 is a flow diagram showing the operation of the invention in a first embodiment; and

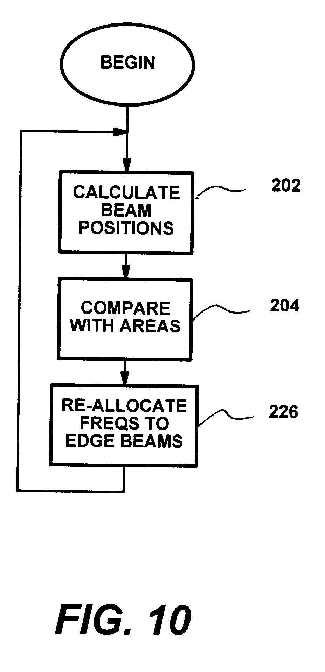

Figure 10 is a flow diagram showing the operation of the invention in a second embodiment.

### FIRST EMBODIMENT

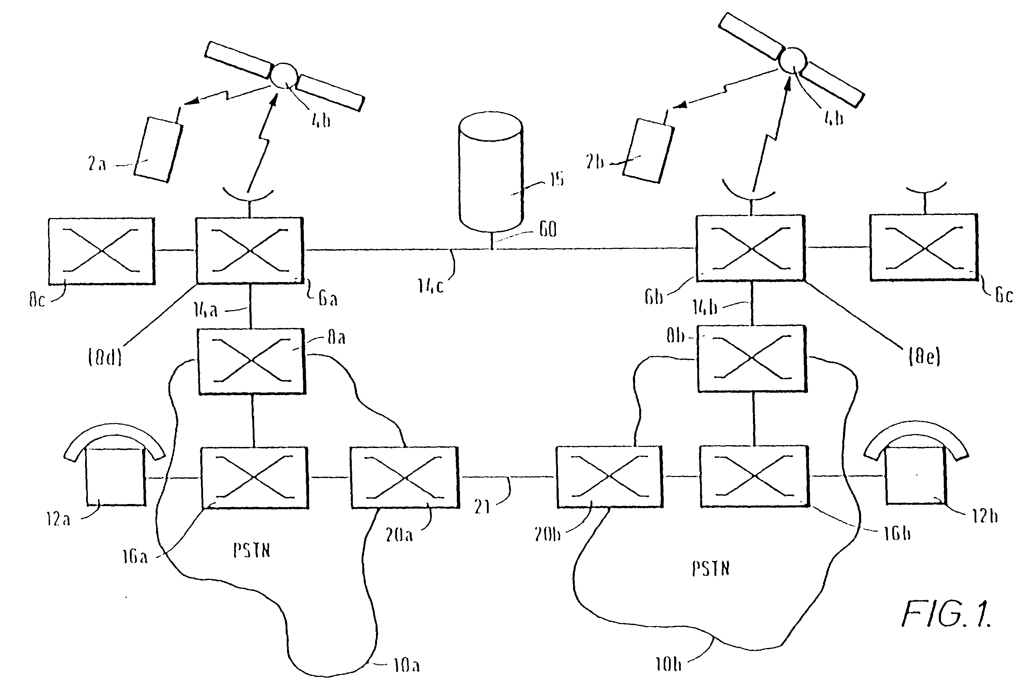

Referring to Figure 1, a satellite communications network according to this embodiment comprises mobile user terminal equipment 2a, 2b (e.g. handsets 2a and 2b); orbiting relay satellites 4a, 4b; satellite Earth station nodes 6a, 6b; satellite system gateway stations 8a, 8b; terrestrial (e.g. public switched) telecommunications networks 10a, 10b; and fixed telecommunications terminal equipment 12a, 12b.

Interconnecting the satellite system gateways 8a, 8b with the Earth station nodes 6a, 6b, and interconnecting the nodes 6a, 6b with each other, is a dedicated ground-based network comprising channels 14a, 14b, 14c. The satellites 4, Earth station nodes 6 and lines 14 make up the infrastructure of the satellite communications network, for communication with the mobile terminals 2, and accessible through the gateway stations 8.

A terminal location database station 15 (equivalent to a GSM HLR) is connected, via a signalling link 60 (e.g. within the channels 14 of the dedicated network) to the gateway station and Earth stations 6.

The PSTNs 10a, 10b comprise, typically, local exchanges 16a, 16b to which the fixed terminal equipment 12a, 12b is connected via local loops 18a, 18b; and international switching centres 20a, 20b connectable one to another via transitional links 21 (for example, satellite links or subsea optical fibre cable links). The PSTNs 10a, 10b and fixed terminal equipment 12a, 12b (e.g. telephone instruments) are well known and almost universally available today.

For voice communications, each mobile terminal apparatus is in communication with a satellite 4 via a full duplex channel (in this embodiment) comprising a downlink channel and an uplink channel, for example (in each case) a TDMA time slot on a particular frequency allocated on initiation of a call, as disclosed in UK patent applications GB 2288913 and GB 2293725. The satellites 4 in this embodiment are non geostationary, and thus, periodically, there is handover from one satellite 4 to another.

### Terminal 2

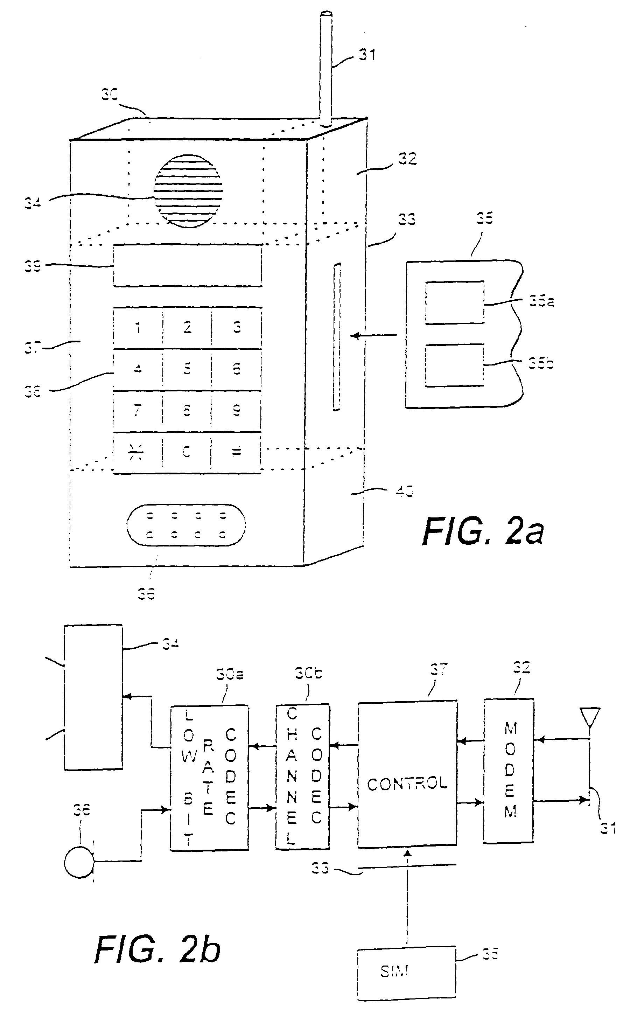

Referring to Figures 2a and 2b, a user terminal equipment 2a of Figure 1 is shown.

The terminals 2a, 2b may be similar to those presently available for use with the GSM system, comprising a digital low rate coder/decoder 30, together with conventional microphone 36, loudspeaker 34, battery 40 and keypad components 38, and a radio frequency (RF) interface 32 and antenna 31 suitable for satellite communications. A display 39 (for example a liquid crystal display) and a 'smart card' reader 33 receiving a smart card (subscriber identity module or SIM) 35 storing user information are also provided.

Specifically, the SIM 35 includes a processor 35a and permanent memory 35b.

Also provided is a terminal control circuit 37 (which may in practice be integrated with the coder 30) consisting of a suitably programmed microprocessor, microcontroller or digital signal processor (DSP) chip.

The control circuit 37 performs various functions including framing speech and data into TDMA time frames for transmission (and likewise demultiplexing received TDMA frames); and performing encryption or enciphering.

The coder/decoder (codec) 30 in this embodiment comprises a low bit rate coder 30a, generating a speech bit stream at around 3.6 kilobits per second, together with a channel coder 30b applying error correcting encoding, to generate an encoded bit stream at a rate of 4.8 kilobits per second.

### Earth Station Node 6

The Earth station nodes 6 are arranged for communication with the satellites.

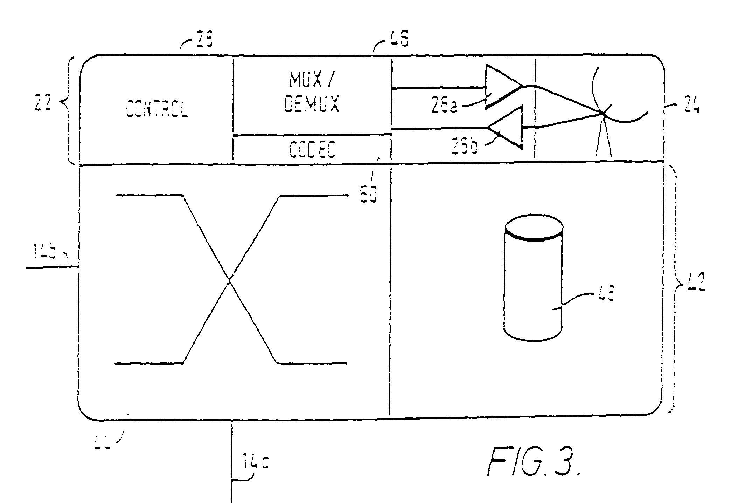

Each Earth station node 6 comprises, as shown in Figure 3, a conventional satellite Earth station 22 (functioning somewhat equivalently to the Base Station of a cellular system) consisting of at least two satellite tracking antennas 24a, 24b arranged to track at least two moving satellites 4a, 4b RF amplifiers 26a for supplying a signal to each antenna 24, and 26b for receiving a signal from the antenna 24; and a control unit 28 for storing the satellite ephemeris data, controlling the steering of the antenna 24, allocating a radio channel, and effecting any control of the satellite 4 that may be required (by signalling to the satellite 4).

The Earth station node 6 further comprises a mobile satellite switching centre 42 comprising a network switch 44 connected to the trunk links 14 forming part of the dedicated network. It may be, for example, a commercially available mobile switch centre (MSC) of the type used in digital mobile cellular radio systems such as GSM systems. A multiplexer and modulator 46 is arranged to receive switched calls from the switch 44 and multiplex them into a composite signal for supply to the amplifier 26 via a low bit-rate voice codec 50. Finally, the Earth station node 6 comprises a local store 48 storing details of each mobile terminal equipment 2a within the area served by the satellite 4 with which the node 6 is in communication. The local store 48 acts to fulfil the functions of a visited location register (VLR) of a GSM system, and may be based on commercially available GSM products. Alternatively, satellite control data may be transmitted from a separate control station.

The gateway stations 8a, 8b comprise, in this embodiment, commercially available mobile switch centres (MSCs) of the type used in digital mobile cellular radio systems such as GSM systems. They could alternatively comprise a part of an international or other exchange forming one of the PSTNs 10a, 10b operating under software control to interconnect the networks 10 with the satellite system trunk lines 14.

The gateway stations 8 comprise a switch arranged to interconnect incoming PSTN lines from the PSTN 10 with dedicated service lines 14 connected to one or more Earth station nodes 6.

Also provided in the gateway stations 8 is a store for billing, service and other information relating to those mobile terminals 2 for which the gateway station 8 is the home gateway station.

The database station 15 comprises a digital data store which contains, for subscriber terminal apparatus 2, a record showing the identity (e.g. the International Mobile Subscriber Identity or IMSI) and the currently active Earth station node 6 with which the apparatus 2 is in communication via the satellite 4.

Thus, in this embodiment the database station 15 acts to fulfil the functions of a home location register (HLR) of a GSM system, and may be based on commercially available GSM products.

Periodically, the Earth station nodes measure the delay and Doppler shift of communications from the terminals 2 and calculate the rough terrestrial position of the mobile terminal apparatus 2 using the differential arrival times and/or Doppler shifts in the received signal, and knowledge of which beams of which satellites 4 the signal was received through. The position is then stored in the database 48.

### Satellites 4

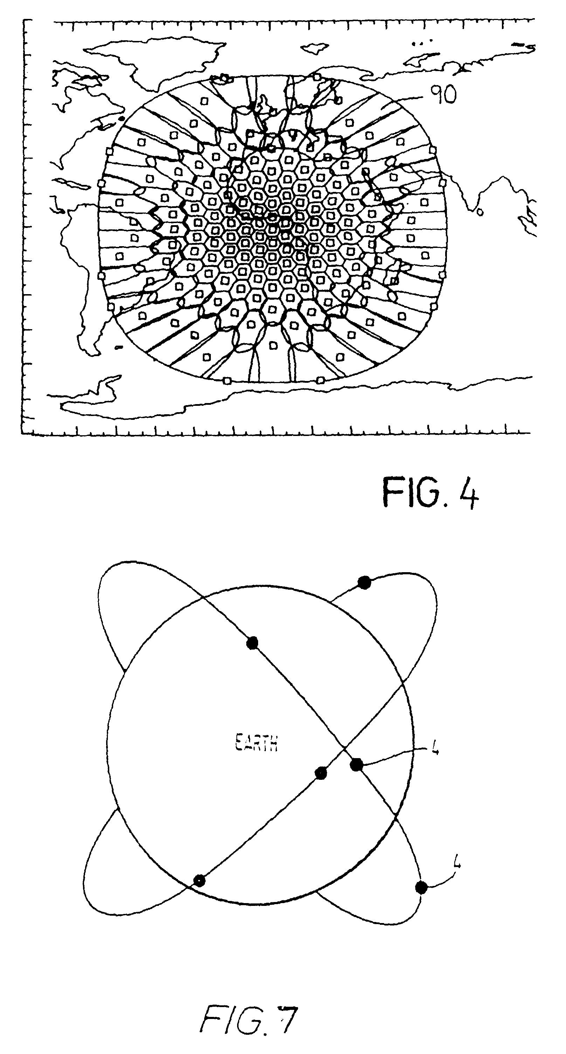

The satellites 4a, 4b comprise generally conventional communications satellites such as the HS601 available from Hughes Aerospace Corp, California, US with a communications payload, which may be as disclosed in GB 2288913. Each satellite 4 is arranged to generate an array (typically hexagonal) of beams covering a footprint beneath the satellite, each beam including a number of different frequency channels and time slots, as described in GB 2293725 and illustrated in Figure 4. For example, there may be 163 beams.

The satellites 4a are arranged in a constellation in sufficient numbers and suitable orbits to cover a substantial area of the globe (preferably to give global coverage).

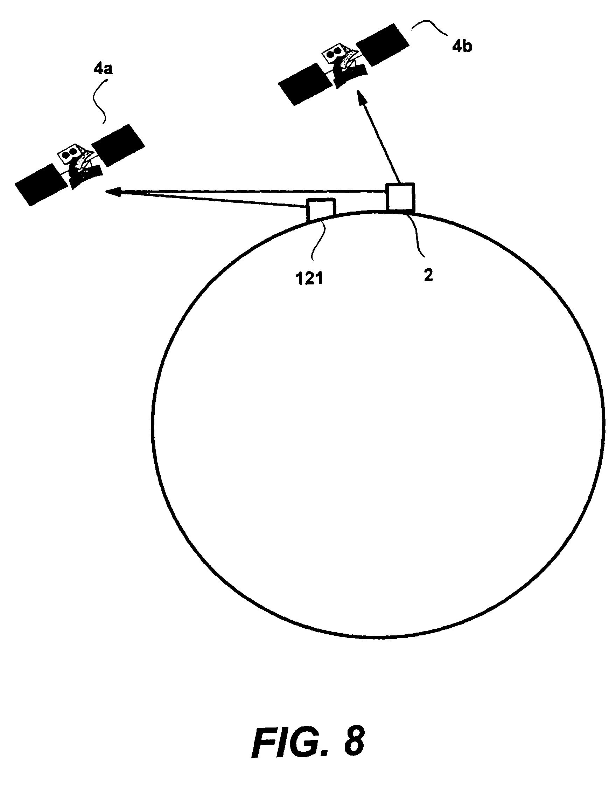

For example 10 (or more) satellites may be provided in two mutually orthogonal intermediate circular orbits (or more) at an altitude of, for example, about 10,500 kilometres (6 hour orbits) and equatorial inclinations of 45°, as shown in Figure 7. Equally, however, larger numbers of lower satellites may be used, as disclosed in EP 0365885, or other publications relating to the Iridium system, for example.

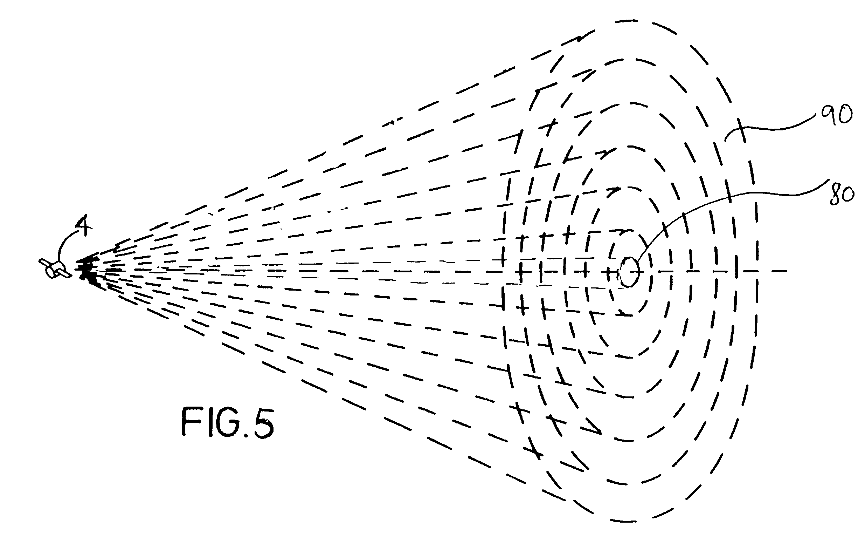

As shown in Figure 5, the beams radiated from the satellite are in rings of equal angular width, and each beam (not shown in Figure 5) is approximately circular. However, as shown in Figure 4, when the beams are projected onto the spherical surface of the Earth, only the centremost beams 80 are still circular; the edgemost beams (i.e. those in at least the outer most ring 90) are elongated radially of the sub-satellite point on Earth, and only partially intersect the Earth (i.e. are intercepted by the horizon of the Earth).

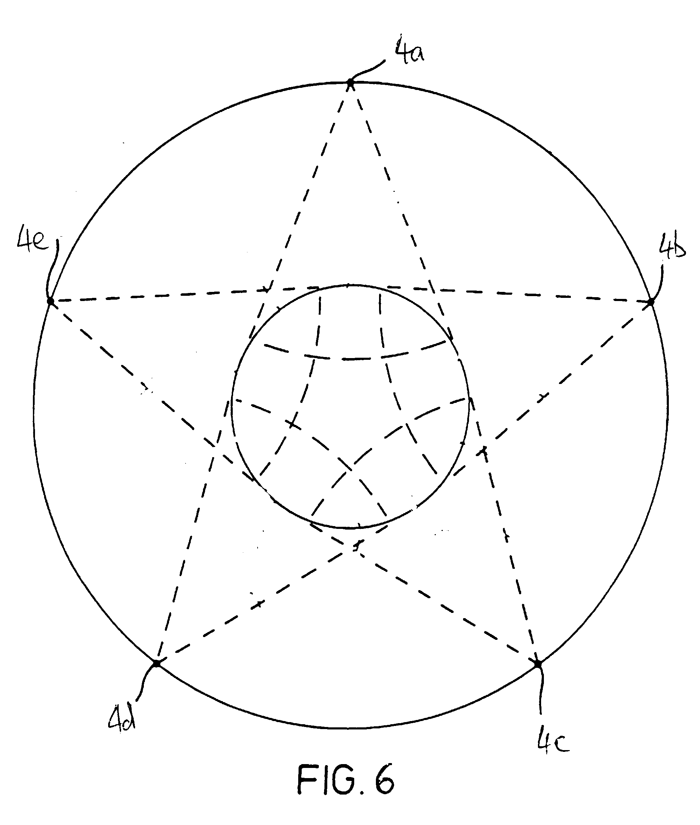

Referring to Figure 6, the satellites 4a-4e in one of the orbital planes have footprints which overlap substantially but not completely, so that forward edge beams of one satellite overlap with the trailing edge beams of its neighbour in the plane and, in some regions, with the beams within the next ring radially inwards of those shown in Figures 4 and 5.

Furthermore, the beams from satellites in one plane overlap those of satellites in the other.

On each beam, the satellite therefore transmits a set of user downlink frequencies. The downlink frequencies on adjacent beams are different, so as to permit frequency re-use between beams. Each beam therefore acts somewhat in the manner of a cell of a conventional terrestrial cellular system. The frequencies are allocated between satellites such that within each plane, neighbouring satellites use different frequencies in those of their beams which overlap and satellites from one plane use different frequencies than those used by satellites of the other plane.

Similarly, each satellite is arranged to receive radiation in an array of beams, which in this embodiment cover the same footprints beneath the satellites, to provide a plurality of user uplink beams each carrying different frequencies.

In this embodiment, each uplink and downlink frequency carries a plurality (e.g. 6) of time division channels, so that each mobile terminal 2 communicates on a channel comprising a given time slot in a given uplink and downlink frequency.

The satellites of this embodiment function as repeaters. Each satellite acts as a "bent pipe", amplifying and relaying signals from the user terminals 2 on the user terminal uplink, to the Earth station nodes 4 on a feeder downlink. Also (although it is not germane to this invention) signals from the Earth stations 4 on a feeder uplink are relayed down to the user terminals 2 on a user downlink.

Every frequency/channel in the user uplink therefore has an equivalent channel in the feeder downlink, and the satellite payload operates in accordance with a predetermined routing table, to translate a user link frequency from one of the user uplink beams (e.g. at around 2 GHz) to an equivalent frequency channel in the feeder downlink (e.g. at 5 or 7 GHz). The satellite performs amplification of the user uplink signal, in this embodiment at an intermediate frequency. The user uplink signals are not, however, digitally decoded and then remodulated. Thus, RF information such as delay and Doppler shift is preserved in the feeder downlink signal reaching the Earth station node 6.

The position of each satellite is known to a high degree of accuracy, using Earth based observations and/or by the use of a global positioning system (GPS) receiver in each satellite 4. The movement of each satellite, defined by the parameters of its orbit (the ephemeris) therefore enables each Earth station node 6 to know where the satellite is, and where it will be in future.

From a knowledge of the shape of the Earth (the polar and equatorial radii, for example) and the satellite orbits, the satellite Earth station node 6 calculates position data of a transmitting source from its signal propagation delay and its Doppler shift in the uplink signal.

According to the present embodiment, a pair of satellites 4a, 4b, one from each of the two planes of satellites, are both able to communicate with a mobile Earth station 2. The terminal 2 lies within a central beam 80 of the satellite 4b, and an edge beam 90 of the satellite 4a.

Nearby, an interference signal is transmitted substantially towards the horizon (i.e. in the azimuthal plane). For example, the interferer 121 may be a point-to-point microwave repeater station, in which case the beam it transmits is a narrow beam in a direction tangential to the surface of the Earth. Alternatively, it may be an azimuthally broad beam or omnidirectional radiator, such as a terrestrial base station of a terrestrial mobile communications system, which radiates substantially towards the horizon but not substantially upwards.

In this case, the radiation emitted by the interferer station 121 will be received in one of the outermost or edge beams 90 of the satellite 4a, but not in any of the beams of the satellite 4b which is more directly overhead to the interferer.

In some cases, the frequencies used by such interferers will be the same as one or more frequency channels used by one or more beams.

The radio frequencies allocated for different purposes are internationally and nationally regulated. Accordingly, potentially interfering transmitters such as 121 will tend to occur in particular known jurisdictions, defined by geographical areas such as a continent.

Thus, although the interference source 121 is closer to the satellite 4b, because of its azimuthal radiation pattern it will only interfere with edge beams of satellites suitably positioned so that the interferer lies within an edge beam. Accordingly, it will not interfere with the satellite 4b but will interfere with the satellite 4a.

Additionally, because of the much greater area covered by the edge beams 90 as shown in Figure 4, more potential interference sources will be covered by these beams even though, since the capacity of all beams is constrained by factors such as the maximum available power, the number of users which can be serviced by the beams is no higher and the received power is lower (because of the longer distance travelled) than for centre beams 80. Accordingly, a user terminal signal in an edge beam 90 is likely to be more subject to interference than in a centre beam 80; in other words, to have a lower ratio of signal to interference.

The control unit 28 retains stored data defining one or more geographical positions or areas within which interference generators such as 121 may be positioned. For example, the stored data may correspond roughly to the parameters of a jurisdiction, such as for example, the continental US, or the European Union. Equally, it may additionally or alternatively comprise the position of one or more known interference stations 121 (for example in terms of terrestrial co-ordinates).

Referring to Figure 8, the process performed by the control unit 28 at each Earth station node 6 in this embodiment will now be described.

In a step 202, for each beam of each satellite, control unit 28 calculates the positions of the perimeters of the beams, using the known orbital ephemeris data and the current time.

For all beams which overlap one of the potentially interfering areas of the Earth, in step 206 it is determined whether, for each edge beam which overlaps the area, the whole area of the edge beam is also covered one or more non-edge beams. If this is the case, then in step 208, the control circuit 28 flags that edge beam as potentially liable to interference, and in setting up subsequent calls, that edge beam is no longer used. Existing calls may be allowed to terminate naturally, but are preferably handed off to one of the other beams.

When all calls are handed off, the Earth station node 6 signals to the satellite 4 to switch off the carrier on the downlink beam, and to cease reception on the uplink beam.

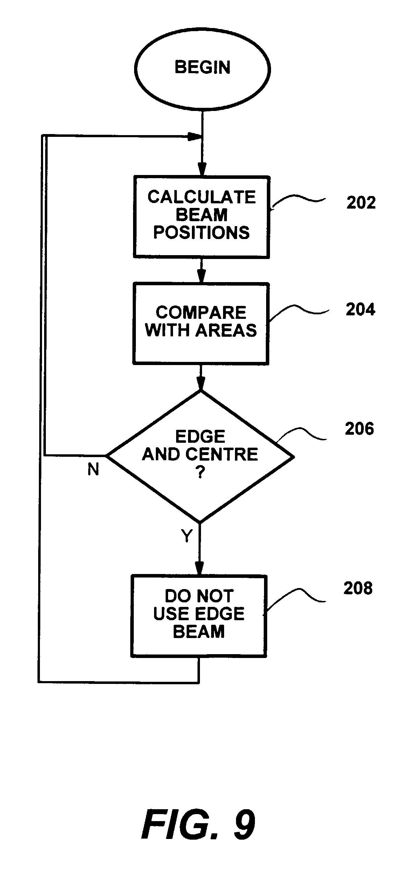

The process of Figure 9 is repeated, at a time interval corresponding to a relatively small fraction of the time it takes a beam to pass over its own width on the ground. For example, for the orbital constellation and numbers of beams quoted, it may be repeated on the order of once a minute, but the repetition rate will be higher for lower orbits or larger numbers of beams.

Thus, as an edge beam enters the area where one or more interference transmitters may lie, then provided the area it covers is also covered by non-edge beams (as is the case in the above described embodiment for equatorial and medium latitudes almost all of the time) the beam is not used until it passes the interference area.

Accordingly, the present embodiment maintains the advantages of spatial diversity in all areas where interference transmitters are not expected, but reduces the availability of spatial diversity in order to improve interference performance (and save satellite power) in areas where interference is anticipated.

It would be possible for the Earth station node 6 to receive signals from both satellites 4a and 4b, and simply to ignore or give little weight to the signal from the lower elevation beam. However, it is more advantageous, as in this embodiment, to decide not to use the additional resource of the low elevation beam, since savings are made both within the satellite (which can use less power) and at the user terminal 2, which needs only transmit half the power otherwise required, thus limiting co-channel interference and saving battery life. It would also be possible reallocate the frequencies used by other beams, to take account of the fact that such frequencies are not being used in the peripheral beams.

### SECOND EMBODIMENT

This embodiment is useful where the interferer 121 or all interferers in an area have a spectrum which overlaps with a second subset, but not a first subset, of the frequencies used by beams of the satellites 4.

The above described steps 202, 204 of Figure 9 are performed in the same manner. However, rather than simply not using edge beams which fall into the area of an interference source, in this embodiment, the edge beams are not used for the first subset of frequencies, which will be subject to interference.

Accordingly, periodically, in step 226, the frequencies allocated to each of the beams is periodically changed, to ensure that in an area subject to interference, edge beams covering that area are allocated frequencies of the first subset, in which interference is not anticipated, and non-edge beams are allocated frequencies from the second subset, including frequencies with which interference is possible.

Naturally, where it is possible to avoid using frequencies of the second subset at all over the area, then this is preferred. However, given that radio spectrum is limited, this may not always be possible.

### OTHER EMBODIMENTS

It will be clear from the foregoing that the above described embodiment is merely one way of putting the invention into effect. Many other alternatives will be apparent to the skilled person and are within the scope of the present invention.

The above-described processes are performed on Earth, but could be performed in the satellite itself.

A database of interference sources and their positions on Earth may be derived from other sources, such as a spare satellite (as described in our earlier European application EP 0858176).

The numbers of satellites and satellite orbits indicated are purely exemplary. Smaller numbers of geostationary satellites, or satellites in higher altitude orbits, could be used; or larger numbers of low Earth orbit (LEO) satellites could be used. Equally, different numbers of satellites in intermediate orbits could be used.

Although TDMA has been mentioned as suitable access protocol, the present invention is fully applicable to other access protocols, such as code division multiple access (CDMA) or frequency division multiple access (FDMA).

It will be understood that components of embodiments of the invention may be located in different jurisdictions or in space. For the avoidance of doubt, the scope of the protection of the following claims extends to any part of a telecommunications apparatus or system or any method performed by such a part, which contributes to the performance of the inventive concept.

## Claims

1. A method of mitigating interference in a satellite user uplink signal of a satellite mobile communications system which comprises a plurality of non-geostationary orbiting satellites (4) each radiating a beam pattern of multiple beams, comprising:
providing overlapping coverage of a region of the Earth which is subject to interference at an interference frequency, by a first beam of a first satellite (4a) and at least a second beam of a second satellite (4b);
determining which of said first or said second beam is more peripheral within their respective satellite beam patterns; and
controlling communications on the more peripheral said beam to limit reception thereby at said interference frequency.

2. A method according to claim 1, further comprising:
maintaining data defining an interference region from which interference at said interference frequency may be transmitted.

3. A method according to claim 1, in which said data defines an interference area of the Earth.

4. A method according to claim 1, in which said data defines a position on the Earth of an interference source.

5. A method according to any of claims 2 to 4, further comprising:
periodically assessing those beams which overlap a said interference area.

6. A method according to any preceding claim, in which said step of controlling communications comprises not using the more peripheral said beam for new calls.

7. A method according to claim 6, in which said step of controlling communications comprises handing off current calls on channels which overlap said interference frequency.

8. A method according to any of claims 1 to 5, in which said step of controlling communications comprises reallocating communications channels between said beams such that frequencies of communications channels used to communicate via said more peripheral beam do not overlap said interference frequency.

9. Apparatus for mitigating interference of a user uplink signal in a satellite mobile communication system, comprising means for performing the method of any preceding claim.

10. Apparatus according to claim 9 arranged to communicate with a terrestrial station (6) of said network.

11. Apparatus for mitigating interference of a user uplink signal in a satellite mobile communication system which comprises a plurality of non-geostationary orbiting satellites (4) each radiating a beam pattern of multiple beams, said apparatus comprising:
means for determining which of a first beam of a first satellite (4a) and at least a second beam of a second satellite (4b) providing overlapping multiple coverage of a region of the Earth, which is subject to interference at an interference frequency, is more peripheral within their respective satellite beam patterns; and
controlling communications on the more peripheral said beam to limit reception thereby at said interference frequency.

12. Apparatus according to claim 11, further comprising a store for storing data defining positions on the Earth where transmitters of said interference may be located, and means for determining when said first and second beams overlap said positions.
